# DEMANDE DE BREVET EUROPEEN

(11) **EP 3 582 357 A1**
(43) Date de publication de la demande: **18.12.2019**
(21) Numéro de dépôt: 19179747.1
(22) Date de dépôt: 12.06.2019
(51) Int. Cl.: H02J 1/06, H02J 7/00, B60L 3/00, B60L 53/14

(54) **DISPOSITIF EMBARQUE AMELIORE POUR LA RECHARGE PAR CONDUCTION D'UN VEHICULE ELECTRIQUE**

(30) Priorité: 13.06.2018 FR 1855154
(71) Demandeur: ALSTOM Transport Technologies, 93400 Saint-Ouen (FR)
(72) Inventeur: HOURTANE, Jean-Luc, 13320 BOUC BEL AIR (FR); NEVOT, Nicolas, 77330 OZOIR LA FERRIERE (FR)
(74) Mandataire: Lavoix

(57) **Abrégé**

Ce dispositif est relié électriquement à des première et deuxième bornes (DC3+, DC3-) d'un moyen de collecte d'énergie (30) et étant muni de premier et deuxième contacts électriques (21, 22) destinés à être mis en contact, pour l'alimentation électrique du moyen de collecte d'énergie, respectivement avec des premiers et deuxième contacts électriques conjugués (41, 42) d'un dispositif d'alimentation (40) au sol, lui-même relié électriquement à une source de puissance électrique (50). Le dispositif comportant une maille (26) reliant le deuxième contact électrique (22) et une borne de sortie (24) connectée à la deuxième borne (DC3-) du moyen de collecte d'énergie, la maille comportant une diode (35) interposée entre le deuxième contact électrique (22) et la deuxième borne (DC3-) du moyen de collecte d'énergie, de manière à éviter la circulation d'un courant vers la deuxième borne du moyen de collecte d'énergie (30).

## Description

La présente invention concerne la recharge par conduction des moyens de stockage d'énergie embarqués à bord d'un véhicule électrique ou hybride à partir d'une station de recharge à demeure.

La recharge par conduction présente de nombreux avantages par rapport notamment à la recharge par induction. Elle permet une recharge plus rapide, avec un rendement plus élevé, au moyen d'une installation qui est moins complexe et par conséquent présente des coûts de déploiement et de maintenance plus faibles.

Parmi les véhicules électriques, la recharge par conduction d'un bus présente certaines spécificités par rapport notamment au cas d'un véhicule ferroviaire, tel qu'un tramway. En effet, à cause de la présence de pneus, le châssis d'un bus (et sa caisse par continuité électrique) est normalement isolé électriquement de la terre.

Pour la recharge par conduction d'un bus, il est actuellement recommandé d'établir simultanément trois liaisons entre un dispositif embarqué, par ailleurs connecté électriquement aux moyens de stockage d'énergie du véhicule électrique, et un dispositif au sol, par ailleurs connecté électriquement à une source de puissance électrique. Sont ainsi établies une première liaison électrique à un potentiel bas, une seconde liaison électrique à un potentiel haut, et une troisième liaison de mise à la terre. Si les deux premières liaisons permettent le transfert d'une puissance électrique entre le sol et le bord, la troisième liaison permet de mettre le châssis du bus au potentiel de la terre et assurer ainsi la sécurité des personnes autour du bus au cours de la recharge.

Ces liaisons résultent de la mise en contact de contacts prévus sur le dispositif embarqué et de contacts conjugués prévus sur le dispositif au sol. Il peut par exemple s'agir de brancher un connecteur mâle en tant que dispositif embarqué et un connecteur femelle en tant que dispositif au sol ; de mettre en contact un pantographe en tant que dispositif embarqué et une perche aérienne pour le dispositif au sol ; ou encore de mettre en contact un frotteur en tant que dispositif embarqué et un plot implanté dans la voie en tant que dispositif au sol. C'est ce dernier mode de réalisation qui sera plus particulièrement utilisé dans la suite de la présente description à titre illustratif.

Une telle installation, qui nécessite l'établissement simultané de trois liaisons, est de fabrication complexe et reste difficile à maintenir en fonctionnement.

Afin de simplifier une telle installation à trois liaisons, le document FR 3 048 387 décrit une installation de recharge par conduction à deux liaisons. Plus précisément, l'installation comporte un dispositif embarqué muni d'un premier contact électrique à un potentiel haut également appelé contact positif et d'un deuxième contact électrique à un potentiel bas, également appelé contact négatif, et un dispositif au sol, conjugué du dispositif embarqué, comportant un premier contact électrique conjugué, également appelé contact positif conjugué et un deuxième contact électrique conjugué, également appelé contact négatif conjugué. Le contact négatif est également relié à la caisse du bus. Le contact négatif conjugué est également connecté à la terre. De la sorte le potentiel bas du contact négatif conjugué est de 0V.

Le contact positif et le contact positif conjugué ont un potentiel supérieur au contact négatif respectivement au contact négatif conjugué.

Pour la recharge, chaque contact électrique du dispositif embarqué est mis en contact du contact électrique conjugué du dispositif au sol et l'installation vérifie à chaque instant de la recharge que la caisse du bus est effectivement au potentiel de la terre. En cas de perte de la connexion entre le contact négatif et le contact négatif conjugué , le transfert de puissance est immédiatement interrompu. Ainsi, une puissance électrique est transmise au bord sans risque pour les personnes se trouvant à proximité de la caisse du bus, celle-ci étant au potentiel de la terre.

Cependant, cette installation à deux liaisons présente le défaut de ne pas pouvoir éviter les conséquences du dysfonctionnement décrit ci-après. Normalement le circuit, dit circuit positif, reliant le contact positif du dispositif embarqué et la borne positive des moyens de stockage d'énergie, et qui est porté au potentiel haut lors de la recharge est isolé de la caisse du bus. Cependant, un dysfonctionnement peut survenir conduisant à une perte d'isolation le long de ce circuit positif. Alors, au moment de la recharge, une boucle conductrice est établie entre les bornes positif et négative du moyen de stockage d'énergie à travers la caisse du véhicule électrique, la borne négative étant connectée à la caisse via le contact négatif et la borne positive via la perte d'isolation le long du circuit positif. Dans ce cas, la batterie se décharge et des courants importants peuvent circuler à travers la caisse. Cette situation présente des risques pour les personnes autour du bus lors de la recharge.

L'invention a donc pour but de répondre à ce problème.

L'invention a donc pour objet un dispositif embarqué pour un véhicule électrique équipé d'un moyen de collecte d'énergie électrique, le dispositif embarqué étant relié électriquement à une première borne et une deuxième borne du moyen de collecte d'énergie et étant muni d'un premier contact électrique et d'un deuxième contact électrique destinés à être mis en contact, pour l'alimentation électrique du moyen de collecte d'énergie, respectivement avec un premier contact électrique conjugué et un deuxième contact électrique conjugué d'un dispositif d'alimentation, de préférence au sol, le dispositif d'alimentation étant relié électriquement à une source de puissance électrique, le dispositif embarqué comportant une maille reliant le deuxième contact électrique et une borne de sortie connectée à la deuxième borne du moyen de collecte d'énergie, la maille comportant une diode interposée entre le deuxième contact électrique et la deuxième borne du moyen de collecte d'énergie, la diode étant propre à éviter la circulation de courant vers la deuxième borne du moyen de collecte d'énergie à travers la maille.

Ce dispositif embarqué constitue une amélioration apportée aux installations à deux liaisons, car il permet de garantir la sécurité des personnes même en cas de perte d'isolation entre les composants du bus portés au potentiel haut et la caisse.

Suivant des modes particuliers de réalisation, le dispositif embarqué comporte une ou plusieurs des caractéristiques suivantes, prises isolément ou suivant toutes les combinaisons techniquement possibles :
- la maille comporte également un noeud de connexion à une caisse du véhicule électrique et la diode est interposée entre le noeud de connexion à la caisse et la deuxième borne ;
- la diode est propre à éviter la circulation de courant entre la première borne et la deuxième borne du moyen de collecte d'énergie à travers la caisse ;
- le noeud de connexion à la caisse et la diode sont positionnés à une distance inférieure à 20 m du deuxième contact électrique ;
- la diode comprend une anode destinée à être connectée à la deuxième borne et une cathode destinée à être connectée au deuxième contact ; et
- la diode comprend une anode destinée à être connectée à la borne de sortie et une cathode destinée à être connectée au noeud de connexion à la caisse.

L'invention a également pour objet un véhicule électrique intégrant le dispositif embarqué précédent. Le véhicule électrique est équipé d'un moyen de collecte d'énergie électrique et d'un dispositif embarqué relié électriquement au moyen de collecte d'énergie électrique et permettant une alimentation par conduction du moyen de collecte d'énergie à partir d'une station de recharge, le dispositif embarqué étant conforme au dispositif embarqué précédent.

De préférence, le véhicule électrique est un bus.

De préférence, le moyen de collecte d'énergie électrique est un moyen de stockage d'énergie électrique ; et
De préférence encore, le véhicule comporte un module de radio communication propre à établir une liaison de communication sans-fil avec un module de radio communication dont est équipée la source de puissance électrique.

L'invention et ses avantages seront mieux compris à la lumière de la description détaillée qui va suivre d'un mode de réalisation particulier de l'invention, donné uniquement à titre d'exemple illustratif et non limitatif. Cette description est faite en se référant au dessin unique représentant schématiquement une installation de recharge et plus généralement de collecte d'énergie électrique intégrant un dispositif embarqué selon l'invention.

La figure représente une installation 10 d'alimentation par conduction permettant l'application, en sécurité, d'une puissance électrique délivrée par une source 50 de puissance électrique à un moyen de collecte d'énergie électrique 30.

La figure illustre notamment, à titre d'exemple, une installation 10 de recharge par conduction permettant l'application, en sécurité, d'une puissance électrique délivrée par une source 50 d'une station de recharge 11 à demeure, à un moyen de stockage d'énergie électrique 30 situé à bord d'un véhicule électrique, notamment d'un bus 12.

La source 50 est par exemple un chargeur de batterie de traction ou une sous-station d'alimentation d'un réseau électrique.

Le moyen de stockage d'énergie électrique 30 est par exemple constitué d'une batterie, mais d'autres solutions techniques sont connues de l'homme du métier, telles que par exemple des supercapacités ou un volant d'inertie.

L'installation 10 est du type à deux liaisons, notamment entre le bord et le sol.

L'installation 10 comporte, embarqué à bord du bus 12, un dispositif embarqué 20 et, dans la station de recharge 11 positionné en dehors du bus 12, notamment au sol, un dispositif conjugué 40 également appelé dispositif d'alimentation ou dispositif au sol.

Le dispositif embarqué 20 comporte deux bornes d'entrée, formant deux contacts, respectivement un premier contact électrique 21 également appelé contact positif et un deuxième contact électrique 22, également appelé contact négatif.

Le contact positif a un potentiel supérieur au potentiel du contact négatif.

Le dispositif embarqué 20 est connecté, par deux bornes de sortie 23 et 24, à des première DC3+ et deuxième DC3+ bornes du moyen de stockage d'énergie électrique 30, également appelées borne positive DC3+ et borne négative DC3- du moyen de stockage d'énergie électrique 30.

Le dispositif d'alimentation, également appelé dispositif au sol 40 est connecté, par deux bornes d'entrée 43 et 44 à des première DC5 et deuxième DC5- bornes de la source 50, également appelées bornes positive et négative, DC5+ et DC5-, de la source 50.

Le dispositif au sol 40 comporte, deux bornes de sortie, formant deux contacts conjugués des contacts du dispositif embarqué 20, à savoir un premier contact électrique conjugué, également appelé contact positif conjugué 41 et un deuxième contact électrique conjugué, également appelé contact négatif conjugué 42.

Le contact conjugué positif a un potentiel supérieur au potentiel du contact conjugué négatif.

Dans le mode de réalisation présenté ici en détail, les contacts conjugués 41 et 42 du dispositif au sol 40 sont intégrés dans un plot 60, implanté dans la chaussée 13 de manière à présenter une surface supérieure affleurant avec la surface de la chaussée sur laquelle circule le bus 12.

Le dispositif embarqué 20 comporte alors un patin 62, monté sous la caisse du bus 12 et propre à être déplacé verticalement entre une position haute, à l'écart du plot 60, et une position basse, en contact avec le plot 60.

Dans la position basse, le contact positif 21 du dispositif embarqué 20 est en contact électrique avec le contact positif conjugué 41 du dispositif au sol 40 et le contact négatif 22 du dispositif embarqué 20 est en contact électrique avec le contact négatif conjugué 42 du dispositif au sol 40.

Le dispositif au sol 40 comporte une première maille, également appelée maille positive 45 qui relie le contact positif conjugué 41 et la borne d'entrée positive 43 connectée à la borne positive DC5+, et une maille négative 46 qui relie le contact négatif conjugué 42 et la borne d'entrée négative 44 connectée la borne négative DC5-.

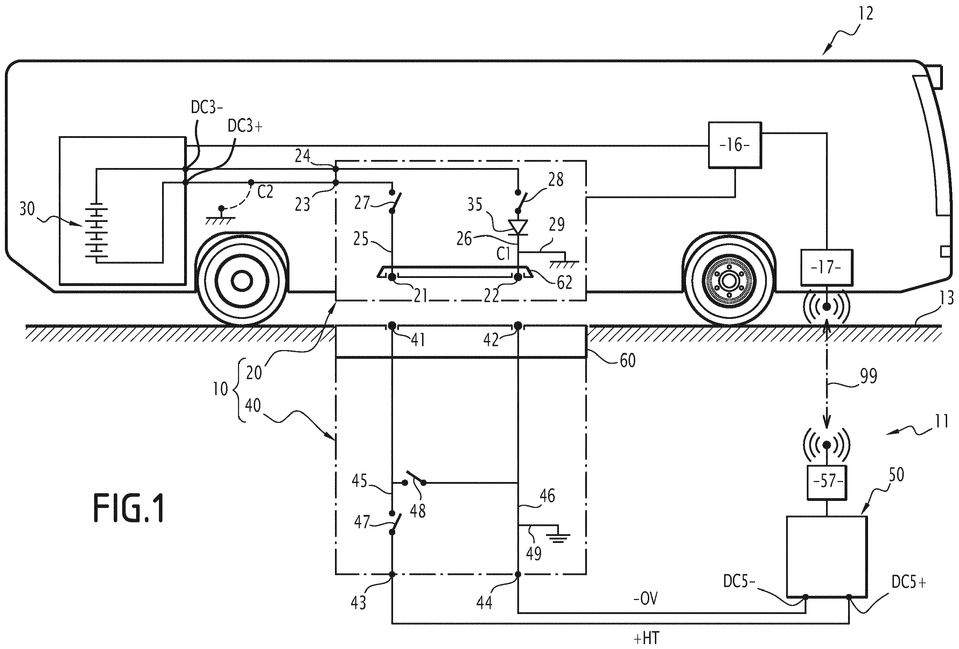

Autour du contact négatif conjugué 42, c'est-à-dire à une distance inférieure à 100m, la maille négative 46 est connectée électriquement à une prise de terre. Ceci est représenté schématiquement sur la figure 1 par la liaison de masse 49.

De ce fait, le potentiel bas des composants négatifs de la station 11 est 0V et le potentiel haut des composants positifs de la station 11 est +HT, par exemple 900V.

La maille positive 45 du dispositif 40 est équipée d'un commutateur commandé 47. De plus, un contacteur de sécurité 48 est placé entre la maille positive et la maille négative du dispositif 40. Le contacteur 48 est utilisé pour une mise en sécurité de la maille positive, et est fermé dès que le contacteur 47 est ouvert.

Le dispositif embarqué 20 comporte une première maille, également appelée maille positive 25, qui relie le contact positif 21 et la borne positive DC3+ du moyen de stockage d'énergie, et une deuxième maille, également appelée maille négative 26 qui relie le contact négatif 22 et la borne négative DC3- du moyen de stockage d'énergie.

La maille positive comporte entre le contact positif 21 et la borne de sortie positive 23, un contacteur commandé positif 27. Le contacteur 27 est propre à basculer d'un état ouvert à un état fermé et inversement. Dans l'état fermé une continuité électrique est établie entre le contact positif 23 et la borne positive DC3+.

La maille négative 26 comporte à une distance inférieure à 20 m du contact négatif 22, un noeud C1 de connexion électrique à la caisse du bus 12. Ceci est représenté schématiquement sur la figure par la liaison de masse 29.

La maille négative comporte également, entre le noeud C1 et la borne de sortie négative 24, un contacteur commandé négatif 28. Le contacteur 28 est propre à basculer d'un état ouvert à un état fermé et inversement. Dans l'état fermé une continuité électrique est établie entre la contact négatif 22 et la borne négative DC3-.

La maille négative comporte, entre le point C1 et la borne de sortie négative 24, et de préférence ente le point C1 et le contacteur commandé négatif 28, une diode 35.

La diode 35 est montée de manière à ce que son anode soit connectée au contacteur commandé négatif 28 et sa cathode, au point C1 relié à la caisse du bus 12.

La diode 35 a pour fonction d'empêcher la circulation de courant entre les bornes positive et négative du moyen de stockage d'énergie en cas de perte d'isolation entre la maille positive et la caisse du véhicule ou entre la maille positive et la terre.

Par exemple, comme représenté en pointillés sur la figure, si la diode 35 n'étaient pas insérée et si le circuit positif (constitué des composants portés au potentiel haut lors de la recharge) était fortuitement relié à la caisse au noeud C2, alors que les contacteurs 27 et 28 étaient fermés lors de la recharge, les bornes positive DC3+ et négative DC3- du moyen de stockage d'énergie 30 seraient en court-circuit à travers la caisse du bus 12.

Cependant, l'interposition de la diode 35 dans la boucle de court-circuit ainsi créée bloque la circulation de tout courant. Le moyen de stockage d'énergie 30 ne peut donc plus débiter de courant. Il n'y a donc plus de risque pour les personnes en contact de la caisse. La situation est donc maitrisée.

Le bus 12 comporte un dispositif de contrôle commande 16.

Il comporte également un module de radio communication 17 propre à établir une liaison de communication sans fil 99 avec un module de radio communication 57 dont est équipée la source 50. Il s'agit par exemple d'une liaison sans fil mettant en oeuvre un protocole de communication conforme au protocole connu sous la dénomination WLAN.

Lorsque le conducteur souhaite recharger les moyens de stockage d'énergie 30 du bus 12 qu'il conduit, il approche ce dernier d'une station de recharge, tel que la station 11.

Le conducteur arrête le bus 12 dans une position de recharge prédéfinie, indiquée par des marquages adaptés au sol.

Dans cette position de recharge, le frotteur 62 se trouve à l'aplomb du plot 60.

A l'arrêt du bus 12, le dispositif de contrôle-commande 16 initie le processus de recharge en commandant la descente du frotteur 62 pour l'appliquer contre le plot 60.

Se faisant, le contact positif 21 du dispositif bord 20 vient en contact électrique du contact positif conjugué 41 du dispositif au sol 40 et le contact négatif 22 du dispositif embarqué 20 vient en contact du contact négatif conjugué 42 du dispositif au sol 40.

Puis, puisque le contact positif 41 est physiquement inaccessible (se situant sous le bus) et le châssis du bus 12 étant raccordé à la terre, le commutateur 48 est d'abord ouvert et le contacteur 47 est ensuite fermé pour établir un contact électrique entre la source 50 et le dispositif embarqué 20, via le dispositif au sol 40.

Puis, par la liaison de communication sans fil 99 entre le dispositif de contrôle-commande 16 du bus 12 et la source 50, la source 50 est informée qu'une connexion est établie. La source 50 adapte les caractéristiques du courant de recharge à générer et à appliquer aux bornes d'entrée du dispositif au sol 40.

Puis, la source 50 informe le dispositif de contrôle-commande 16 du bus, via la liaison de communication sans fil 99, que la recharge peut débuter.

Le dispositif de contrôle-commande 16 du bus 12 bascule alors en fermeture les contacteurs 27 et 28 du dispositif embarqué 20 pour connecter ce dernier aux bornes du moyen de stockage d'énergie 30.

A cet instant, si le circuit haute tension du bus n'est pas correctement isolé galvaniquement de la caisse, la présence de la diode 35 permet d'éviter toute circulation de courant entre les bornes DC3- et DC3+ du moyen de stockage d'énergie, via la caisse du bus 12. La diode 35 permet également de protéger le moyen de stockage d'énergie en cas de court-circuit entre les contacts 21 et 22.

La recharge commence alors et est maintenue jusqu'à réception par le conducteur du bus d'une demande d'interruption d'alimentation.

La source 50, informée de l'interruption de l'alimentation, cesse d'appliquer une puissance électrique entre les bornes d'entrée du dispositif au sol 40. Les contacteurs 27 et 28 sont ouverts et le dispositif au sol 40 bascule en ouverture le contacteur 47, et en fermeture le contacteur de mise à la terre 48.

Le frotteur 62 peut alors être actionné pour être replacé dans sa position haute, avant que le bus ne reparte.

## Revendications

1. Dispositif embarqué (20) pour un véhicule électrique (12) équipé d'un moyen de collecte d'énergie électrique (30), le dispositif embarqué étant relié électriquement à une première borne (DC3+) et une deuxième borne (DC3-) du moyen de collecte d'énergie et étant muni d'un premier contact électrique (21) et d'un deuxième contact électrique (22) destinés à être mis en contact, pour l'alimentation électrique du moyen de collecte d'énergie, respectivement avec un premier contact électrique conjugué (41) et un deuxième contact électrique conjugué (42) d'un dispositif d'alimentation (40), de préférence au sol, le dispositif d'alimentation (40) étant relié électriquement à une source de puissance électrique (50),
le dispositif embarqué comportant une maille (26) reliant le deuxième contact électrique (22) et une borne de sortie (24) connectée à la deuxième borne (DC3-) du moyen de collecte d'énergie, la maille comportant une diode (35) interposée entre le deuxième contact électrique (22) et la deuxième borne (DC3-) du moyen de collecte d'énergie, la diode étant propre à éviter la circulation de courant vers la deuxième borne du moyen de collecte d'énergie (30) à travers la maille,
le dispositif embarqué étant **caractérisé en ce que** la maille comporte également un noeud (C1) de connexion à une caisse du véhicule électrique (12) et **en ce que** la diode (35) est interposée entre le noeud (C1) de connexion à la caisse et la deuxième borne (DC3-).

2. Dispositif selon la revendication 1, dans lequel la diode est propre à éviter la circulation de courant entre la première borne et la deuxième borne du moyen de collecte d'énergie (30) à travers la caisse.

3. Dispositif selon la revendication 1 ou 2, dans lequel le noeud (C1) de connexion à la caisse et la diode (35) sont positionnés à une distance inférieure à 20 m du deuxième contact électrique.

4. Dispositif selon l'une quelconque des revendications précédentes, dans lequel la diode (35) comprend une anode destinée à être connectée à la deuxième borne (DC3-) et une cathode destinée à être connectée au deuxième contact (22).

5. Dispositif selon le revendication 1, dans lequel la diode (35) comprend une anode destinée à être connectée à la borne de sortie (24) et une cathode destinée à être connectée au noeud (C1) de connexion à la caisse.

6. Véhicule électrique (12) équipé d'un moyen de collecte d'énergie électrique (30) et d'un dispositif embarqué (20) relié électriquement au moyen de collecte d'énergie électrique (30) et permettant une alimentation par conduction du moyen de collecte d'énergie à partir d'une station de recharge (11), **caractérisé en ce que** le dispositif embarqué est selon l'une quelconque des revendications précédentes.

7. Véhicule électrique selon la revendication 6, dans lequel le véhicule électrique est un bus.

8. Véhicule électrique selon la revendication 6 ou 7, dans lequel le moyen de collecte d'énergie électrique est un moyen de stockage d'énergie électrique.

9. Véhicule électrique selon l'une quelconque des revendications 6 à 8, dans lequel le véhicule comporte un module de radio communication (17) propre à établir une liaison de communication sans-fil avec un module de radio communication dont est équipée la source de puissance électrique (50).
